# FASCICULE DE BREVET EUROPEEN

(11) **EP 0 837 185 B1**
(45) Date de publication et mention de la délivrance du brevet: **16.06.2004**
(21) Numéro de dépôt: 97402053.9
(22) Date de dépôt: 03.09.1997
(51) Int. Cl.: E01C 7/26, E01C 19/10, E01C 7/35, C08L 95/00

(54) **Enrobé bitumineux contenant des polymères et du polyéthylène**
Polymer und Polyethylene enthaltendes bituminöses Mischgut
Polymer and polyethylene containing bituminous mix

(30) Priorité: 12.09.1996 FR 9611145
(43) Date de publication de la demande: 22.04.1998
(73) Titulaire: COLAS, 92653 Boulogne-Billancourt Cédex (FR)
(72) Inventeur: Bilal, Julien, 75013 Paris (FR)
(74) Mandataire: Michelet, Alain

(56) Documents cités:
- EP-A- 0 049 485
- EP-A- 0 605 377
- DE-A- 2 146 915
- DE-A- 2 259 407
- FR-A- 2 228 894

## Description

L'invention concerne un enrobé bitumineux contenant des polymères et du polyéthylène, une couche de roulement et une couche de base réalisées avec un tel enrobé bitumineux, un procédé de fabrication d'un enrobé bitumineux contenant des polymères et du polyéthylène de récupération, ainsi qu'un procédé de réalisation d'un revêtement routier avec un tel enrobé bitumineux.

L'enrobé bitumineux, objet de la présente invention, est destiné à la réalisation de revêtements routiers de chaussées routières et aéronautiques, de plates-formes industrielles et portuaires ou de tout autre type de chaussée fortement sollicitée ou sujette à l'orniérage ou au fluage.

En effet, les chaussées destinées à des trafics intenses ou à supporter de fortes charges sont très sollicitées en particulier lorsque la vitesse des véhicules est faible et la pression de leurs pneumatiques élevée. Ces chaussées doivent résister à ces sollicitations quelles que soient les conditions climatiques et notamment en présence des variations thermiques qui exercent leurs propres contraintes.

Cependant, les revêtements routiers utilisés à ce jour s'ornièrent et fluent par temps chaud. Leur résistance au poinçonnement devient très faible, voire insuffisante, et le passage d'un engin lourd laisse des déformations importantes à la surface des couches de chaussée constituées avec des enrobés actuels. Inversement, lorsqu'il fait froid, les enrobés utilisés jusqu'à maintenant deviennent très rigides, fragiles, et la sollicitation de ces enrobés provoque leur fissuration et accélère leur dégradation. Une première amélioration a été obtenue en utilisant, pour la fabrication des enrobés, des liants bitumineux contenant des polymères. Ceci améliore leur comportement à basse température d'utilisation, mais ne donne pas de résultat satisfaisant par temps chaud.

Le but de l'invention est de remédier aux inconvénients mentionnés ci-avant. Plus particulièrement, l'enrobé bitumineux doit être formulé de manière telle que les chaussées, qu'il permet de réaliser aient une bonne résistance, quel que soit le climat.

Cet objectif doit être atteint dans de bonnes conditions économiques.

Un enrobé bitumineux à chaud conforme au préambule de la revendication 1 est connu du document EP-A-0605377. La composition de cet enrobé bitumineux connue permet plus particulièrement l'utilisation massive de polyéthylène recyclé. Le polyéthylène utilisé est un polyéthylène linéaire de basse densité et le squelette minéral a une granulométrie discontinue afin que l'enrobé drainant puisse être utilisé pour la confection de chaussées drainantes. La rigidité et la résistance à la fatigue de cet enrobé ne sont pas satisfaisantes.

Ainsi, l'invention a pour objet un enrobé conforme à la revendication 1. Le polyéthylène peut être pur, c'est-à-dire venant directement de fabrication industrielle, ou de récupération, c'est-à-dire obtenu par recyclage d'objets usagés contenant ou faits en polyéthylène.

L'enrobé bitumineux de l'invention comprend des granulats dont la granulométrie est située dans une des gammes suivantes: 0/6, 0/8, 0/10, 0/14 et 0/20.

Cet enrobé bitumineux peut être utilisé sur ces chaussées routières, des chaussées aéronautiques, des pistes de chars et des voiries militaires, ainsi que sur des plates-formes et voiries industrielles et aussi sur des voies de bus et voies de tramways sur pneumatiques.

Ses principaux avantages sont, par comparaison aux enrobés à module élevé, une sensibilité réduite aux variations thermiques une meilleure tenue à l'eau et au gel, une meilleure autoréparabilité, une meilleure résistance au poinçonnement et à l'orniérage, ainsi qu'une rigidité et résistance à la fatigue supérieures.

Selon différents modes de réalisation apportant chacun leurs avantages particuliers, l'enrobé bitumineux de l'invention peut également avoir l'une ou l'autre des caractéristiques suivantes, considérées isolément ou dans toutes leurs combinaisons techniquement possibles:
- le polyéthylène est un polyéthylène linéaire de basse densité,
- le polyéthylène est un polyéthylène linéaire de basse densité dosé entre 0,20 et 1 p.p.c.,
- le liant bitumineux modifié est un bitume pur modifié par un copolymère styrène-butadiène-styrène (SBS),
- les granulats sont de granulométrie continue; (cette caractéristique concerne notamment les enrobés bitumineux utilisés pour des couches de base d'une chaussée),
- les granulats sont de granulométrie semi-discontinue; (cette caractéristique s'applique notamment aux enrobés bitumineux utilisés pour la réalisation de couches de roulement d'une chaussée).

Le but de l'invention est également atteint par une couche de base et une couche de roulement mince d'une route, réalisées avec un enrobé tel que décrit ci-avant, les couches de base réalisées avec un enrobé selon l'invention ayant une épaisseur comprise entre 6 et 16 cm environ, alors que les couches de roulement ont une épaisseur comprise entre 2 cm et 8 cm environ.

Le but de l'invention est atteint par ailleurs par un procédé de fabrication d'un enrobé bitumineux à chaud tel que défini plus haut et qui est destiné à constituer un revêtement routier. Le procédé comprend les étapes de porter les granulats à la température d'enrobage, de porter le liant bitumineux contenant le ou les polymères à la température d'enrobage et de malaxer les granulats et le liant bitumineux en vue de produire l'enrobé bitumineux.

Conformément à l'invention, du polyéthylène est introduit directement dans le malaxeur.

Selon des modes de réalisation avantageux, le procédé selon l'invention peut être mis en oeuvre en introduisant le polyéthylène dans le malaxeur
- en sacs thermofusibles; (cette étape s'applique plus particulièrement aux centrales d'enrobage discontinues), ou bien
- au moyen d'une vis doseuse adaptée au malaxeur; (cette étape s'applique particulièrement aux centrales d'enrobage continues).

La température d'enrobage est davantageusement comprise entre 150°C et 190°C.

Le but de l'invention est aussi atteint par un procédé de réalisation d'un revêtement routier avec un enrobé bitumineux tel que défini plus haut ou obtenu par la mise en oeuvre d'un procédé de fabrication tel que défini ci-avant, l'enrobé bitumineux étant compacté au moyen d'un finisseur à pneus ou à cylindres vibrants.

D'autres caractéristiques et avantages de l'invention ressortiront à la lecture de deux exemples de réalisation non-limitatifs décrits ci-après.

### Exemple 1:

L'enrobé bitumineux selon l'invention est fabriqué dans une centrale d'enrobage discontinue. Après avoir introduit dans le malaxeur des granulats de granulométrie continue de granulométrie 0/14 en vue de la fabrication d'un enrobé bitumineux destiné à une couche de base d'une épaisseur de 12 cm, on introduit un liant constitué d'un bitume pur de pénétration comprise entre 16 et 50, mesurée selon la norme NFT 66-004, et modifié par un copolymère SBS à raison de 2 à 6% par rapport au poids du bitume et dont le module de richesse est compris entre 3,0 et 3,8. On porte les granulats et le liant bitumineux à la température d'enrobage, comprise entre 150 et 190°C. Lorsque cette température est atteinte, on introduit un polyéthylène prépesé, c'est-à-dire conditionné en sacs thermofusibles, directement dans le malaxeur. Ce polyéthylène est un polymère linéaire de basse densité et est dosé entre 0,20 et 1 p.p.c.

### EXEMPLE 2:

Pour la réalisation d'une couche de roulement, dont l'épaisseur est 4 cm, on utilise des granulats à granulométrie semi-discontinue de la gamme 0/10. On introduit de tels granulats dans une centrale d'enrobage continu, et y introduit également un liant constitué d'un bitume pur de pénétration comprise entre 16 et 50, mesurée selon la norme NFT 66-004, et modifié par un copolymère SBS à raison de 2 à 6%. Le module de richesse de ce liant est compris entre 3,0 et 3,8. Ensuite, on porte les granulats et le liant à la température d'enrobage, comprise entre 150 et 190°C.

Pendant le malaxage, on introduit du polyéthylène dans le malaxeur au moyen d'une vis doseuse. Le dosage du polyéthylène est compris entre 0,20 et 1 p.p.c.

L'enrobé bitumineux, obtenu suivant l'un ou l'autre de ces deux exemples de réalisation, est chargé dans des camions.

Sur le chantier, l'enrobé bitumineux est répandu sur la chaussée au moyen d'un finisseur classique, et compacté par un compacteur à pneus et un compacteur à cylindres vibrants.

Les caractéristiques techniques de l'enrobé bitumineux ainsi obtenu sont telles que, lorsque la température de l'enrobé dépasse 50°C, le polyéthylène linéaire de basse densité maintient une rigidité supérieure à celle obtenue jusqu'à maintenant. Le copolymère SBS assure une meilleure élasticité et autoréparabilité, et le fluage diminue également. Il s'ensuit un comportement au poinçonnement et à l'orniérage nettement meilleur par rapport au comportement des produits obtenus jusqu'à maintenant.

Lorsque la température de l'enrobé descend en dessous de -10°C, le copolymère SBS et le polyéthylène linéaire de basse densité améliorent l'élasticité et permettent une déformabilité nettement plus importante que celle des enrobés utilisés jusqu'à maintenant. Il s'ensuit que les enrobés bitumineux de l'invention se fissurent nettement moins que les enrobés utilisés jusqu'à maintenant. A titre d'exemple, et pour une compacité de 96,5%, un enrobé bitumineux selon l'invention présente les caractéristiques suivantes:
- déformation e6 à 10°C, 25 Hertz: environ 150 µm déformation
- module de rigidité
   = à - 10°C, 10 Hz: environ 25.000 MPa
   = à + 40°C, 10 Hz: environ 5.500 MPa

## Revendications

1. Enrobé bitumineux à chaud destiné à constituer un revêtement routier, comprenant des granulats, un liant constitué par un bitume modifié par des polymères ou copolymères élastomériques, et complémentairement du polyéthylène, **caractérisé en ce que** la granulométrie des granulats est dans une des gammes suivantes 0/6, 0/8, 0/10, 0/14 et 0/2.

2. Enrobé selon la revendication 1, **caractérisé en ce que** le polyéthylène est un polyéthylène linéaire de basse densité.

3. Enrobé selon la revendication 2, **caractérisé en ce que** le polyéthylène linéaire de basse densité est dosé entre 0,20 et 1 p.p.c.

4. Enrobé selon l'une des revendications 1 à 3, **caractérisé en ce que** le liant bitumineux est un bitume pur modifié par un copolymère styrène-butadiène-styrène.

5. Enrobé selon l'une des revendications 1 à 4, **caractérisé en ce que** les granulats sont de granulométrie continue.

6. Enrobé selon l'une des revendications 1 à 4, **caractérisé en ce que** les granulats sont de granulométrie semi-discontinue.

7. Enrobé selon la revendication 1, **caractérisé en ce que** les granulats sont de granulométrie continue 0/14 et le liant est un bitume pur de pénétration comprise entre 16 et 50, mesurée selon la norme NFT 66-004, et modifiée par un copolymère SBS à raison de 2 à 6% par rapport au poids du bitume et dont le module de richesse est compris entre 3,0 et 3,8.

8. Enrobé selon la revendication 1, **caractérisé en ce que** les granulats sont de granulométrie semi-discontinue 0/10 et le liant est un bitume pur de pénétration comprise entre 16 et 50, mesurée selon la norme NFT 66-004, et modifiée par un copolymère SBS à raison de 2 à 6% par rapport au poids du bitume et dont le module de richesse est compris entre 3,0 et 3,8.

9. Couche de roulement mince d'une route, **caractérisée en ce qu'**elle est réalisée avec un enrobé selon la revendication 6, l'épaisseur de la couche étant comprise entre 2 cm et 8 cm.

10. Couche de base d'une route, **caractérisée en ce qu'**elle est réalisée avec un enrobé selon la revendication 5, l'épaisseur de la couche étant comprise entre 6 cm et 16 cm.

11. Procédé de fabrication d'un enrobé bitumineux à chaud, selon l'une quelconque des revendications 1 à 8, destiné à constituer un revêtement routier et comprenant des granulats et un liant bitumineux modifié par des polymères, le procédé comprenant les étapes de porter les granulats à la température d'enrobage, de porter le liant bitumineux contenant le ou les polymères à la température d'enrobage et de malaxer les granulats et le liant bitumineux en vue de produire l'enrobé bitumineux, **caractérisé en ce qu'**un polyéthylène est introduit directement dans le malaxeur.

12. Procédé selon la revendication 11, mis en oeuvre dans une centrale de fabrication discontinue, **caractérisé en ce que** le polyéthylène est introduit dans le malaxeur en sacs thermofusibles.

13. Procédé selon la revendication 11, mis en oeuvre dans une centrale de fabrication, **caractérisé en ce que** le polyéthylène est introduit dans le malaxeur au moyen d'une vis doseuse adaptée au malaxeur.

14. Procédé selon l'une des revendications 11 à 13, **caractérisé en ce que** la température d'enrobage est comprise entre 150°C et 190°C.

15. Procédé de réalisation d'un revêtement routier avec un enrobé bitumineux selon l'une quelconque des revendications 1 à 8, ou obtenu par la mise en oeuvre d'un procédé de fabrication selon l'une des revendications 11 à 14, **caractérisé en ce que** l'enrobé bitumineux, après application, est compacté au moyen d'un compacteur à pneus et un compacteur à cylindres vibrants.

## Claims

1. A hot bituminous coated material adapted for making a road surface, comprising granulates, a binder made from a bitumen modified by elastomeric polymers or copolymers and additionally polyethylene, **characterized in that** the granulate grain size is in one of the following ranges 0/6, 0/8, 0/10, 0/14 and 0/20.

2. A coated material according to claim 1, **characterized in that** the polyethylene is a linear low density polyethylene.

3. A coated material according to claim 2, **characterized in that** the linear low density polyethylene is metered between 0.20 and 1 ppc.

4. A coated material according to any one of claims 1 to 3, **characterized in that** the bituminous binder is a pure bitumen modified by a styrene-butadiene-styrene copolymer.

5. A coated material according to any one of claims 1 to 4, **characterized in that** the granulates are of a continuous grain size.

6. A coated material according to any one of claims 1 to 4, **characterized in that** the granulates are of a semi-discontinuous grain size.

7. A coated material according to claim 1, **characterized in that** the granulates are of a 0/14 continuous grain size and the binder is a pure bitumen with a penetration capacity between 16 and 50, measured according to the NFT 66-004 standard, and modified by a SBS copolymer in a quantity from 2 to 6% based on the bitumen weight and the content module of which is comprised between 3.0 and 3.8.

8. A coated material according to claim 1, **characterized in that** the granulates are of a 0/10 semi-discontinuous grain size and the binder is a pure bitumen with a penetration capacity between 16 and 50, measured according to the NFT 66-004 standard, and modified by a SBS copolymer in a quantity from 2 to 6% based on the bitumen weight and the content module of which is comprised between 3.0 and 3.8.

9. A thin road running layer, **characterized in that** it is made with a coated material according to claim 6, the layer thickness being comprised between 2 cm and 8 cm.

10. A road base layer, **characterized in that** it is made with a coated material according to claim 5, the layer thickness being comprised between 6 cm and 16 cm.

11. A method for making a hot bituminous coated material according to any one of claims 1 to 8 adapted for making a road surface and comprising granulates and a polymer-modified bituminous binder, the method comprising the steps of bringing the granulates to the coating temperature, bringing the bituminous binder containing the polymer(s) to the coating temperature and mixing the granulates and the bituminous binder so as to produce the bituminous coated material, **characterized in that** a polyethylene is directly introduced into the mixer.

12. A method according to claim 11, implemented in a discontinuous making unit, **characterized in that** the polyethylene is introduced into the mixer in hot melt bags.

13. A method according to claim 11, implemented in a making unit, **characterized in that** the polyethylene is introduced into the mixer through a metering screw adapted for the mixer.

14. A method according to any one of claims 11 to 13, **characterized in that** the coating temperature is comprised between 150°C and 190°C.

15. A method for making a road surface with a bituminous coated material according to any one of claims 1 to 8, or obtained by implementing a making method according to any one of claims 11 to 14, **characterized in that** the bituminous coated material after application is compacted through a multityred roller and a vibrating compressor.

## Patentansprüche

1. Bituminöses Warmmischgut, das dazu bestimmt ist, einen Straßenbelag zu bilden, der Granulate, ein Bindemittel bestehend aus einem durch Polymere oder Elastomer-Copolymere modifizierten Bitumen und ergänzend Polyethylen umfasst, **dadurch gekennzeichnet, dass** die Granulometrie der Granulate in einem der folgenden Bereiche 0/6, 0/8, 0/10, 0/14 und 0/20 liegt.

2. Mischgut nach Anspruch 1, **dadurch gekennzeichnet, dass** das Polyethylen ein lineares Polyethylen mit niedriger Dichte ist.

3. Mischgut nach Anspruch 2, **dadurch gekennzeichnet, dass** das lineare Polyethylen mit niedriger Dichte zwischen 0,20 und 1 p.p.c. dosiert ist.

4. Mischgut nach einem der Ansprüche 1 bis 3, **dadurch gekennzeichnet, dass** das bituminöse Bindemittel ein reines Bitumen ist, das durch einen Styrol-Butadien-Styrol-Copolymer modifiziert ist.

5. Mischgut nach einem der Ansprüche 1 bis 4, **dadurch gekennzeichnet, dass** die Granulate kontinuierliche Granulometrie aufweisen.

6. Mischgut nach einem der Ansprüche 1 bis 4, **dadurch gekennzeichnet, dass** die Granulate halb kontinuierliche Granulometrie aufweisen.

7. Mischgut nach Anspruch 1, **dadurch gekennzeichnet, dass** die Granulate kontinuierliche Granulometrie 0/14 aufweisen und das Bindemittel ein reines Bitumen mit einem Eindringen zwischen 16 und 50 gemessen nach der Norm NFT 66-004 ist und durch einen SBS-Copolymer zu 2 bis 6 % im Vergleich zum Gewicht des Bitumens modifiziert ist, und dessen Reichhaltigkeitsmodul zwischen 3,0 und 3,8 liegt.

8. Mischgut nach Anspruch 1, **dadurch gekennzeichnet, dass** die Granulate halb diskontinuierliche Granulometrie 0/10 aufweisen und das Bindemittel ein reines Bitumen mit einem Eindringen zwischen 16 und 50 gemessen nach der Norm NFT 66-004 ist und durch einen SBS-Copolymer zu 2 bis 6 % im Vergleich zum Gewicht des Bitumens modifiziert ist, und dessen Reichhaltigkeitsmodul zwischen 3,0 und 3,8 liegt.

9. Dünne Fahrbahndeckenschicht einer Straße, **dadurch gekennzeichnet, dass** sie mit einem Mischgut nach Anspruch 6 hergestellt ist, wobei die Stärke der Schicht zwischen 2 cm und 8 cm liegt.

10. Fahrbahngrundschicht einer Straße, **dadurch gekennzeichnet, dass** sie mit einem Mischgut nach Anspruch 5 hergestellt ist, wobei die Stärke der Schicht zwischen 6 cm und 16 cm liegt.

11. Herstellungsverfahren eines bituminösen Warmmischguts nach einem der Ansprüche 1 bis 8, dazu bestimmt, einen Straßenbelag zu bilden, und das Granulate und ein durch Polymere modifiziertes bituminöses Bindemittel umfasst, wobei das Verfahren die Schritte des Erhitzens der Granulate auf die Beschichtungstemperatur, des Erhitzens des bituminösen Bindemittels mit dem oder den Polymeren auf die Beschichtungstemperatur und des Durchmischens der Granulate und des bituminösen Bindemittels zum Herstellen des bituminösen Mischgut umfasst, **dadurch gekennzeichnet, dass** ein Polyethylen direkt in die Mischanlage eingeführt wird.

12. Verfahren nach Anspruch 11, ausgeführt in einer Zentrale mit ununterbrochener Herstellung, **dadurch gekennzeichnet, dass** das Polyethylen in wärmeschmelzbaren Säcken in die Mischanlage eingeführt wird.

13. Verfahren nach Anspruch 11, ausgeführt in einer Herstellungszentrale, **dadurch gekennzeichnet, dass** das Polyethylen mit einer Dosierschraube, die an die Mischanlage angepasst ist, in die Mischanlage eingeführt wird.

14. Verfahren nach einem der Ansprüche 11 bis 13, **dadurch gekennzeichnet, dass** die Beschichtungstemperatur zwischen 150 °C und 190 °C liegt.

15. Verfahren zum Herstellen eines Straßenbelags mit einem bituminösen Mischgut nach einem der Ansprüche 1 bis 8 oder erzielt durch das Anwenden eines Herstellungsverfahrens nach einem der Ansprüche 11 bis 14, **dadurch gekennzeichnet, dass** das bituminöse Mischgut nach dem Auftragen mit einer Gummiradwalze oder einer Walze mit Vibrationszylindem kompaktiert wird.
